# EUROPEAN PATENT APPLICATION

(11) **EP 4 328 033 A1**
(43) Date of publication of application: **28.02.2024**
(21) Application number: 22791563.4
(22) Date of filing: 30.03.2022
(51) Int. Cl.: B41J 2/01, C09D 11/322, B41M 5/00

(54) **INKJET INK, INK SET, INK MEDIUM SET, AND PRINTING MEDIUM**

(30) Priority: 19.04.2021 JP 2021070176
(71) Applicant: Nippon Kayaku Kabushiki Kaisha, Tokyo 100-0005 (JP)
(72) Inventor: KAJI, Yuki, Tokyo 115-8588 (JP); YOSHIDA, Keishiro, Tokyo 115-8588 (JP); MISAWA, Shunta, Tokyo 115-8588 (JP); MATSUMURA, Aiko, Tokyo 115-8588 (JP)
(74) Representative: Maiwald GmbH
(86) International application number: PCT/JP2022/016359
(87) International publication number: WO 2022/224788

(57) **Abstract**

Provided is an inkjet ink, etc., containing a pigment, a water-soluble organic solvent, and an organic compound (excluding said pigment and said water-soluble organic solvent), wherein said organic compound has an interfacial tension against PET of 15.50 mN/m or less, the value of (B)/(A) is 0.005-1, where (A) is the total mass of said water-soluble organic solvent in the ink and (B) is the total mass of said organic compound, and the surface tension at 25°C is 43.1 mN/m or less. Also provided are an ink set and an ink medium set comprising the ink, and a printing medium to which the ink is adhered.

## Description

### TECHNICAL FIELD

The present invention relates to an inkjet ink, an ink set, an ink and medium set, and a printed medium.

### BACKGROUND ART

A printing method with an inkjet printer (inkjet printing method), which is one of representative color printing methods, involves generating small droplets of ink and adhering them to a printing medium such as paper to perform printing. In recent years, advances have been made in the inkjet printing method for industrial applications, and there is a growing demand for methods that support various printing media.

Among the printing media used for industrial applications, there is also a non-ink-absorbent medium represented by a film. In order to print on such a non-ink-absorbent medium, a solvent ink using an organic solvent as the main solvent, a curable ink containing a polymerizable monomer, and the like have been developed. However, these inks have many safety issues for the natural environment, living organisms, and the like, and their applications have been limited. Therefore, a growing trend in recent years has been for development of a water-based ink using water as the main solvent (see, for example, Patent Documents 1 to 3).

Conventional inks proposed in Patent Documents 1 to 3, however, show poor wettability to the non-ink-absorbent medium such as a polyethylene terephthalate (PET) film and a polypropylene (PP) film.

### Citation List

### Patent Document

Patent Document 1: Japanese Patent No. 5504890
Patent Document 2: Japanese Unexamined Patent Application, Publication No. 2020-125382
Patent Document 3: Japanese Unexamined Patent Application, Publication No. 2020-55943

### DISCLOSURE OF THE INVENTION

### Problems to be Solved by the Invention

An object of the present invention is to provide: an inkjet ink with good wettability to a non-ink-absorbent medium; an ink set including the inkjet ink; an ink and medium set including the inkjet ink or the ink set and a printing medium; and a printed medium to which the inkjet ink or each inkjet ink included in the ink set has adhered.

### Means for Solving the Problems

Specific means for achieving the above object includes embodiments described below.
1) An inkjet ink containing a pigment, a water-soluble organic solvent, and an organic compound excluding the pigment and the water-soluble organic solvent, in which the inkjet ink satisfies any one of conditions (1) to (3) below and has a surface tension of 43.1 mN/m or less at 25°C:
   (1) the water-soluble organic solvent has a logP value of more than -5.420 and less than 1.258,
      the organic compound has an interfacial tension against polyethylene terephthalate (PET) of 15.50 mN/m or less, where the interfacial tension at 25°C between a PET film and a mixture of 1 part by mass of the organic compound, 9 parts by mass of 1,4-butanediol, and 90 parts by mass of purified water, as determined by contacting the mixture with the PET film, is defined as the interfacial tension of the organic compound against PET, and
      a value of (B)/(A) is 0.005 to 1, where (A) is the total mass of the water-soluble organic solvent contained in the inkjet ink, and (B) is the total mass of the organic compound;
   (2) the organic compound is at least one selected from the group consisting of ethylene glycol monobenzyl ether, diethylene glycol monobenzyl ether, and diethylene glycol monophenyl ether; and
   (3) the organic compound is a C7-C9 1,2-alkanediol, and a value of (C)/(A) is less than 0.4, where (A) is the total mass of the water-soluble organic solvent contained in the inkjet ink, and (C) is the total mass of the 1,2-alkanediol.
2) The inkjet ink according to 1), in which the organic compound has an interfacial tension against PET of 14.00 mN/m or less.
3) The inkjet ink according to 1), in which the organic compound has an interfacial tension against PET of 11.00 mN/m or less.
4) An ink set including: the inkjet ink according to any one of 1) to 3); and an additional inkjet ink different from the inkjet ink.
5) An ink and medium set including: the inkjet ink according to any one of 1) to 3) or the ink set according to 4); and a printing medium.
6) A printed medium to which the inkjet ink according to any one of 1) to 3) or each inkjet ink included in the ink set according to 4) has adhered.

### Effects of the Invention

The present invention can provide: an inkjet ink with good wettability to a non-ink-absorbent medium; an ink set including the inkjet ink; an ink and medium set including the inkjet ink or the ink set and a printing medium; and a printed medium to which the inkjet ink or each inkjet ink included in the ink set has adhered.

### PREFERRED MODE FOR CARRYING OUT THE INVENTION

Hereinafter, specific embodiments to which the present invention is applied will be described in detail. As used herein, "C.I." means a "color index". As used herein, the terms "alkylene", "propylene", and "alkyl" are used in a sense that encompasses both linear and branched structures, unless otherwise specified.

### <Inkjet Ink>

An inkjet ink (hereinafter, also simply referred to as an "ink") according to the present embodiment contains a pigment, a water-soluble organic solvent, and an organic compound excluding the pigment and the water-soluble organic solvent, satisfies any one of conditions (1) to (3) below, and has a surface tension of 43.1 mN/m or less at 25°C:
(1) the water-soluble organic solvent has a logP value of more than -5.420 and less than 1.258,
   the organic compound has an interfacial tension against polyethylene terephthalate (PET) of 15.50 mN/m or less, where the interfacial tension at 25°C between a PET film and a mixture of 1 part by mass of the organic compound, 9 parts by mass of 1,4-butanediol, and 90 parts by mass of purified water upon contact of the mixture with the PET film is defined as the interfacial tension of the organic compound against PET, and
   the value of (B)/(A) is 0.005 to 1, where (A) is the total mass of the water-soluble organic solvent contained in the ink according to the present embodiment, and (B) is the total mass of the organic compound;
(2) the organic compound is at least one selected from the group consisting of ethylene glycol monobenzyl ether, diethylene glycol monobenzyl ether, and diethylene glycol monophenyl ether; and
(3) the organic compound is a C7-C9 1,2-alkanediol, and
   the value of (C)/(A) is less than 0.4, where (A) is the total mass of the water-soluble organic solvent contained in the ink according to the present embodiment, and (C) is the total mass of the 1,2-alkanediol.

The surface tension of the ink according to the present embodiment at 25°C is preferably 27.0 to 42.4 mN/m, more preferably 27.0 to 41.2 mN/m, and even more preferably 29.0 to 39.8 mN/m. When the surface tension of the ink is within the above range, the ink tends to have good wettability to a non-ink-absorbent medium.

Hereinafter, components contained in the ink according to the present embodiment will be described in detail. Note that each of the components described below may be used alone or in combinations of two or more thereof.

### [Pigment]

Examples of the pigment include an inorganic pigment, an organic pigment, an extender pigment, and a hollow particle.

Examples of the inorganic pigment include carbon black, a metal oxide, a metal hydroxide, a metal sulfide, a metal ferrocyanide, and a metal chloride.

When the ink according to the present embodiment is a black ink, and the pigment is an inorganic pigment, the inorganic pigment contained in the black ink is preferably carbon black such as thermal black, acetylene black, oil furnace black, gas furnace black, lamp black, gas black, and channel black. Specific examples of the carbon black include the Raven series, manufactured by Columbia Carbon; the Monarch series, Regal series, and Mogul series, manufactured by Cabot Corporation; the Color Black series, Printex series, Special Black series, and Nerox series, manufactured by Orion Engineered Carbons; and the MA series, MCF series, No.25, No.33, No.40, No.47, No.52, No.900, and No.2300, manufactured by Mitsubishi Chemical Corporation.

When the ink according to the present embodiment is a white ink, and the pigment is an inorganic pigment, examples of the inorganic pigment contained in the white ink include an oxide, nitride, or oxynitride of a metal such as zinc, silicon, aluminum, titanium, strontium, and zirconium; and an inorganic compound such as glass and silica. Among them, titanium dioxide and zinc oxide are preferred.

Examples of the organic pigment include various pigments such as azo, disazo, phthalocyanine, quinacridone, isoindolinone, dioxazine, perylene, perinone, thioindigo, anthraquinone, and quinophthalone. Among them, a disazo pigment is preferred.

Specific examples of the organic pigment include yellow pigments such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, 202, and 213; red pigments such as C.I. Pigment Red 5, 7, 12, 48, 48:1, 57, 88, 112, 122, 123, 146, 149, 150, 166, 168, 177, 178, 179, 184, 185, 202, 206, 207, 254, 255, 257, 260, 264, 269, and 272; blue pigments such as C.I. Pigment Blue 1, 2, 3, 15, 15:1, 15:2, 15:3, 15:4, 15:6, 16, 22, 25, 60, 66, and 80; violet pigments such as C.I. Pigment Violet 19, 23, 29, 37, 38, and 50; orange pigments such as C.I. Pigment Orange 13, 16, 43, 68, 69, 71, and 73; green pigments such as C.I. Pigment Green 7, 36, and 54; and black pigments such as C.I. Pigment Black 1. Among them, C.I. Pigment Blue 15:4 is preferred.

Examples of the extender pigment include silica, calcium carbonate, talc, clay, barium sulfate, and white carbon. The extender pigment is often used in combination with another pigment.

The hollow particle available can be a known hollow particle described in, for example, U.S. Patent No. 4880465, Japanese Patent No. 3562754, Japanese Patent No. 6026234, Japanese Patent No. 5459460, Japanese Unexamined Patent Application, Publication No. 2003-268694, and Japanese Patent No. 4902216, and in particular, is preferably used as a white pigment.

The average particle size of the pigment is preferably 30 to 300 nm and more preferably 50 to 250 nm. The average particle size as used herein refers to an average particle size of particles as measured using laser light scattering.

The content of the pigment with respect to the total mass of the ink according to the present embodiment is preferably 1 to 30% by mass, more preferably 1 to 10% by mass, and even more preferably 2 to 8% by mass.

### [Water-soluble Organic Solvent]

The water-soluble organic solvent means a solvent having a water-solubility of 50 g/L or more at 25°C. Examples of the water-soluble organic solvent include C1-C6 alkanol such as methanol, ethanol, propanol, isopropanol, butanol, isobutanol, secondary butanol, and tertiary butanol; carboxylic acid amide such as N,N-dimethylformamide and N,N-dimethylacetamide; lactam such as 2-pyrrolidone, N-methyl-2-pyrrolidone, and N-methylpyrrolidin-2-one; cyclic urea such as 1,3-dimethylimidazolidin-2-one and 1,3-dimethyl hexahydropyrimid-2-one; ketone, keto-alcohol, or carbonate such as acetone, 2-methyl-2-hydroxypentan-4-one, and ethylene carbonate; cyclic ether such as tetrahydrofuran and dioxane; mono-, oligo-, or polyalkylene glycol or thioglycol having a C2-C6 alkylene unit such as ethylene glycol, diethylene glycol, 1,2-propylene glycol, 1,3-propylene glycol, 1,2-butylene glycol, 1,4-butylene glycol, diethylene glycol, triethylene glycol, tetraethylene glycol, dipropylene glycol, polyethylene glycol (preferably with a molecular weight of 400, 800, 1540, or more), polypropylene glycol, thiodiglycol, and dithiodiglycol; C3-C9 polyol (triol) such as glycerol, diglycerol, hexane-1,2,6-triol, and trimethylolpropane; glycol ether (preferably, C4-C10 mono-, di-, or triethylene glycol ether or C4-C13 mono-, di-, or tripropylene glycol ether), such as ethylene glycol monomethyl ether, ethylene glycol monoethyl ether, ethylene glycol monoallyl ether, ethylene glycol monoisopropyl ether, diethylene glycol monomethyl ether, diethylene glycol monoethyl ether, diethylene glycol monobutyl ether (butyl carbitol), triethylene glycol monomethyl ether, triethylene glycol monoethyl ether, triethylene glycol monobutyl ether, propylene glycol monopropyl ether, propylene glycol monobutyl ether, dipropylene glycol monopropyl ether, and dipropylene glycol monomethyl ether; C5-C9 alkanediol such as 1,2-pentanediol, 1,5-pentanediol, 1,2-hexanediol, 1,6-hexanediol, 2-methyl-2,4-pentanediol, 2-ethyl-1,3-hexanediol, and 2,4-diethyl-1,5-pentanediol; γ-butyrolactone; and dimethyl sulfoxide. Among them, C2-C5 diethylene glycol ether, C3-C6 alkanediol, 3-methoxy-1-butanol, and 3-methoxy-3-methyl-1-butanol are preferred; and 1,4-butanediol, 1,2-pentanediol, 1,5-pentanediol, 1,2-hexanediol, 3-methoxy-1-butanol, and 3-methoxy-3-methyl-1-butanol are more preferred.

When the ink according to the present embodiment satisfies the condition (1), the logP value of the water-soluble organic solvent is more than -5.420 and less than 1.258 and preferably -1.164 to 1.188. As used herein, the "logP value" refers to an octanol/water partition coefficient and can be expressed as a numerical value of "ClogP", which is calculated using, for example, ChemDraw Professional ver. 16.0 manufactured by PerkinElmer, Inc.

The content of the water-soluble organic solvent with respect to the total mass of the ink according to the present embodiment is preferably 1 to 20% by mass, more preferably 1 to 15% by mass, even more preferably 1 to 10% by mass, and particularly preferably 3 to 7% by mass.

### [Organic Compound]

When the ink according to the present embodiment satisfies the condition (1), the organic compound to be used has an interfacial tension against PET of 15.50 mN/m or less. In this case, the interfacial tension of the organic compound against PET is preferably 14.00 mN/m or less and more preferably 11.00 mN/m or less. As used herein, the "interfacial tension against PET" means the interfacial tension at 25°C between a PET film and a mixture of the organic compound (1 part by mass), 1,4-butanediol (9 parts by mass), and purified water (90 parts by mass) upon contact of the mixture with the PET film and can be calculated from the contact angle of the mixture to the PET film using Young's equation. The PET film to be used is, for example, a PET film (E5102) manufactured by Toyobo Co., Ltd.

Examples of the organic compound having an interfacial tension against PET of 15.50 mN/m or less include glycol ether (preferably mono-, di-, or triethylene glycol aryl ether) such as ethylene glycol monophenyl ether, diethylene glycol monophenyl ether, triethylene glycol monophenyl ether, ethylene glycol monobenzyl ether, diethylene glycol monobenzyl ether, triethylene glycol monobenzyl ether, monooxyethylene β-naphthyl ether, dioxyethylene β-naphthyl ether, and trioxyethylene β-naphthyl ether; and alkanediol (preferably, C7-C10 both-terminal alkanediol), such as 2-methyl-2-propyl-1,3-propanediol, 2-ethyl-2-butyl-1,3-propanediol, 2-ethylhexane-1,3-diol, 1,2-heptanediol, 1,2-octanediol, 1,2-nonanediol, 1,7-heptanediol, 1,8-octanediol, 1,9-nonanediol, and 1,10-decanediol. The mono-, di-, or triethylene glycol aryl ether and C7-C10 both-terminal alkanediol are preferred; and diethylene glycol monobenzyl ether, diethylene glycol monophenyl ether, and 1,8-octanediol are more preferred.

When the ink according to the present embodiment satisfies the condition (2), the organic compound to be used is at least one selected from the group consisting of ethylene glycol monobenzyl ether, diethylene glycol monobenzyl ether, and diethylene glycol monophenyl ether.

When the ink according to the present embodiment satisfies the condition (3), the organic compound to be used is a C7-C9 1,2-alkanediol such as 1,2-heptanediol, 1,2-octanediol, and 1,2-nonanediol.

The organic compound has a property of being easily oriented to the interface between the ink and the printing medium after the ink lands on the printing medium. It is considered that this property lowers the interfacial tension generated at the interface between the ink and the printing medium and promotes the wetting and spreading of the ink on the printing medium, resulting in excellent wettability.

The content of the organic compound with respect to the total mass of the ink according to the present embodiment is preferably 0.05 to 1.5% by mass, more preferably 0.1 to 1% by mass, and even more preferably 0.3 to 0.7% by mass, from the viewpoint of wettability to a non-ink-absorbent medium.

In particular, when the ink according to the present embodiment satisfies the condition (1), the value of (B)/(A) is 0.005 to 1, preferably 0.007 to 1, more preferably 0.01 to 1, and even more preferably 0.05 to 0.2, where (A) is the total mass of the water-soluble organic solvent contained in the ink according to the present embodiment, and (B) is the total mass of the organic compound.

When the ink according to the present embodiment satisfies the condition (3), the value of (C)/(A) is less than 0.4, preferably 0.01 to 0.3 and more preferably 0.05 to 0.2, where (A) is the total mass of the water-soluble organic solvent contained in the ink according to the present embodiment, and (C) is the total mass of the 1,2-alkanediol.

### [Water]

The ink according to the present embodiment may contain water. The water is preferably water with a small amount of impurities contained such as metal ions, i.e., ion-exchanged water, distilled water, or the like.

When the ink according to the present embodiment contains water, the content thereof with respect to the total mass of the ink according to the present embodiment is preferably 50 to 90% by mass, more preferably 60 to 90% by mass, and even more preferably 70 to 90% by mass.

### [Dispersant]

The ink according to the present embodiment may contain a dispersant. Examples of the dispersant include a copolymer composed of at least two monomers (preferably at least one of which is a hydrophilic monomer) selected from monomers such as styrene and a derivative thereof; vinylnaphthalene and a derivative thereof; an aliphatic alcohol ester of α,β-ethylene unsaturated carboxylic acids; (meth)acrylic acid and a derivative thereof; maleic acid and a derivative thereof; itaconic acid and a derivative thereof; fumaric acid and a derivative thereof; and vinyl acetate, vinyl alcohol, vinyl pyrrolidone, or acrylamide and a derivative thereof. The hydrophilic monomer includes a monomer in which a carboxyl group remains after polymerization, such as acrylic acid and methacrylic acid.

Examples of the copolymer include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, and a styrene-maleic acid copolymer. Among them, a styrene-(meth)acrylic acid copolymer, a styrene-(meth)acrylic acid-(meth)acrylic acid ester copolymer, a (meth)acrylic acid ester-(meth)acrylic acid copolymer, and a polyethylene glycol (meth)acrylate-(meth)acrylic acid copolymer are preferred; a styrene-(meth)acrylic acid copolymer, a styrene-(meth)acrylic acid-(meth)acrylic acid ester copolymer, and a (meth)acrylic acid ester-(meth)acrylic acid copolymer are more preferred; a (meth)acrylic acid ester-(meth)acrylic acid copolymer are even more preferred; and a methacrylic acid ester-methacrylic acid copolymer is particularly preferred. Examples of the copolymer include a block copolymer, a random copolymer, and a graft copolymer. The copolymer may be in the form of a salt.

As used herein, the term "(meth)acrylic" is used in a sense that includes both "acrylic" and "methacrylic". The same applies to "(meth)acrylate" and the like.

The dispersant can be synthesized or obtained as a commercially available product.

Examples of the dispersant obtained by synthesis include an A-B block polymer disclosed in International Publication No. WO 2013/115071. The monomer constituting an A block of the A-B block polymer disclosed in International Publication No. WO 2013/115071 is at least one monomer selected from (meth)acrylic acid and linear or branched C4 alkyl (meth)acrylate, preferably at least one monomer selected from methacrylic acid and n-butyl methacrylate, and more preferably a combination of these two monomers. In addition, the monomer constituting a B block of the A-B block polymer disclosed in International Publication No. WO 2013/115071 is at least one monomer selected from benzyl methacrylate and benzyl acrylate, preferably benzyl methacrylate. Specific examples of the A-B block polymer include block copolymers disclosed in Synthesis Examples 3 to 8 of International Publication No. WO 2013/115071.

Examples of the commercially available dispersant include Joncryl 62, 67, 68, 678, or 687 (styrene-acrylic copolymer manufactured by BASF SE); ARON AC-10SL (polyacrylic acid manufactured by Toagosei Co., Ltd.); and BYKJET 9151, 9152, 9170, or 9171 (wet dispersant manufactured by BYK).

The mass average molecular weight (MW) of the dispersant is preferably 3000 to 50000, and more preferably 7000 to 25000. The mass average molecular weight of the dispersant can be measured by gel permeation chromatography (GPC). Specifically, the measurement can be performed by using HLC-8320 GPC (manufactured by Tosoh Corporation) as a GPC device, two TSK gel Super MultIpore HZ-H (manufactured by Tosoh Corporation, inner diameter of 4.6 mm × 15 cm) as columns, tetrahydrofuran as an eluent, and TSK Standard (manufactured by Tosoh Corporation) as a standard sample.

The acid value of the dispersant is preferably 50 to 300 mg KOH/g, more preferably 80 to 275 mg KOH/g, and even more preferably 80 to 250 mg KOH/g.

The dispersant can be used in a state of mixture with a pigment. In addition, the pigment may be used in a state where part or all of the surface thereof is covered with the dispersant. Alternatively, both of these states may be used together.

When the ink according to the present embodiment contains the dispersant, a ratio of the total mass of the dispersant to the total mass of the pigment is preferably 0.01 to 1.0, more preferably 0.05 to 0.6, and even more preferably 0.1 to 0.5.

### [Fixing Resin]

The ink according to the present embodiment may contain a fixing resin. When the ink according to the present embodiment contains the fixing resin, an image printed on a printing medium tends to have improved fastness, such as water resistance, abrasion resistance, and alcohol resistance. The fixing resin is preferably at least one selected from a polymer and a wax.

Examples of the polymer include a urethane polymer, a polyester polymer, an acrylic polymer, a vinyl acetate polymer, a vinyl chloride polymer, a styrene-acrylic polymer, an acryl-silicon polymer, and a styrene-butadiene polymer. Among them, polymers selected from urethane, acrylic, and styrene-butadiene polymers are preferred, and acrylic and urethane polymers are more preferred.

The polymer is available commercially in the form of an emulsion. Examples of the commercially available polymer emulsion include Superflex 420, 470, and 890 (urethane resin emulsions, all manufactured by DKS Co. Ltd.); Hydran HW-350, HW-178, HW-163, HW-171, AP-20, AP-30, WLS-201, and WLS-210 (urethane resin emulsions, all manufactured by DIC Corporation); 0569, 0850Z, and 2108 (styrene-butadiene resin emulsions, all manufactured by JSR Corporation); AE980, AE981A, AE982, AE986B, and AE104 (acrylic resin emulsions, all manufactured by Emulsion Technology Co., Ltd.); and NeoCryl A-1105, A-1125, and A-1127 (acrylic resin emulsions, all manufactured by DSM Coating Resins Ltd.).

The wax available can be a natural wax and a synthetic wax.

Examples of the natural wax include a petroleum wax such as paraffin wax and microcrystalline wax; a lignite wax such as montane wax; a vegetable wax such as carnauba wax and candelilla wax; and an animal and plant wax such as beeswax and lanolin.

Examples of the synthetic wax include a polyalkylene wax (preferably, a poly-C2-C4 alkylene wax), an oxidized polyalkylene wax (preferably, an oxidized poly-C2-C4 alkylene wax), and a paraffin wax. Among them, a polyethylene wax, a polypropylene wax, an oxidized polyethylene wax, an oxidized polypropylene wax, and a paraffin wax are preferred.

The average particle size of the wax is preferably 50 nm to 5 um, and more preferably 100 nm to 1 um in order to prevent clogging of an inkjet head.

The wax is available commercially in the form of an emulsion. Examples of the commercially available wax emulsion include CERAFLOUR 925, 929, 950, and 991, AQUACER 498, 515, 526, 531, 537, 539, 552, and 1547, and AQUAMAT 208, 263, and 272; MINERPOL 221 (all manufactured by BYK); Mitsui Hi-WAX NL100, NL200, NL500, 4202E, 1105A, 2203A, NP550, NP055, and NP505 (all manufactured by Mitsui Chemicals, Inc.); KUE-100 and 11 (all manufactured by Sanyo Chemical Industrial, Co., Ltd.); and HYTEC P-5300, E-6500, 9015, and 6400 (all manufactured by Toho Chemical Industry, Co., Ltd.).

When the ink according to the present embodiment contains the fixing resin, the content thereof with respect to the total mass of the ink according to the present embodiment is preferably 0.1 to 30% by mass, more preferably 1 to 20% by mass, even more preferably 2 to 15% by mass, particularly preferably 3 to 10% by mass, and especially preferably 7 to 9% by mass.

### [Surfactant]

The ink according to the present embodiment may contain a fixing resin. Examples of the surfactant include an anionic surfactant, a nonionic surfactant, a silicone surfactant, and a fluorinated surfactant. Among them, a surfactant selected from a silicone surfactant and a fluorinated surfactant is preferred, and a silicone surfactant is more preferred from the viewpoint of safety to living organisms and the environment.

Examples of the anionic surfactant include an alkyl sulfocarboxylate, an α-olefin sulfonate, a polyoxyethylene alkyl ether acetate, a polyoxyethylene alkyl ether sulfate, an N-acyl amino acid or a salt thereof, an N-acyl methyl taurine salt, an alkyl sulfate polyoxyalkyl ether sulfate, an alkyl sulfate polyoxyethylene alkyl ether phosphate, a rosin acid soap, a castor oil sulfate ester salt, a lauryl alcohol sulfate ester salt, an alkylphenol-type phosphate ester, an alkyl-type phosphate ester, an alkylaryl sulfonate, a diethyl sulfosuccinate, diethyl hexylsulfosuccinate, and a dioctyl sulfosuccinate.

Examples of the nonionic surfactant include an ether surfactant such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ether, and polyoxyethylene distyrenated phenyl ether (e.g., Emulgen A-60, A-90, and A-500, manufactured by Kao Corporation); an ester surfactant such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate; an acetylene glycol (or acetylenic alcohol) surfactant (e.g., Surfynol 104, 104PG50, 82, 420, 440, 465, and 485; and Olfine STG, manufactured by Evonik Japan Co., Ltd.) such as 2,4,7,9-tetramethyl-5-decyne-4,7-diol, 3,6-dimethyl-4-octyne-3,6-diol, and 3,5-dimethyl-1-hexyn-3-ol; and a polyglycol ether surfactant.

Examples of the silicone surfactant include polyether-modified siloxane and polyether-modified polydimethylsiloxane. Examples thereof include Dynol 960 and 980, manufactured by Air Products and Chemicals, Inc.; Silface SAG001, SAG002, SAG003, SAG005, SAG503A, SAG008, SAG009, and SAG010, manufactured by Nissin Chemical Industry Co., Ltd.; BYK-345, 347, 348, 349, 3450 (aka BYKLPX 23289), 3451 (aka BYKLPX 23347), 3455, LP-X23288, and LP G20726, manufactured by BYK; and TEGO Twin 4000 and TEGO Wet KL 245, 250, 260, 265, 270, and 280, manufactured by Evonic Tego Chemie GmbH.

Examples of the fluorinated surfactant include a perfluoroalkyl sulfonic acid compound, a perfluoroalkyl carboxylic acid compound, a perfluoroalkyl phosphate ester compound, a perfluoroalkyl ethylene oxide adduct, and a polyoxyalkylene ether polymer compound having a perfluoroalkyl ether group in a side chain thereof. Examples of the commercially available product include Capstone FS-30 and FS-31 manufactured by The Chemours Company.

### [Other Components]

The ink according to the present embodiment may contain an ink preparation agent such as a fungicide, a preservative, a pH adjuster, a chelating reagent, a rust inhibitor, a defoamer, a water-soluble ultraviolet absorber, and an antioxidant, if necessary. The amount of each ink preparation agent contained can be arbitrarily set according to the application of the ink and the like.

### (Fungicide)

Examples of the fungicide include sodium dehydroacetate, sodium benzoate, sodium pyridinethion-1-oxide, p-hydroxybenzoic acid ethyl ester, and 1,2-benzisothiazolin-3-one and a salt thereof.

### (Preservative)

Examples of the preservative include an organic sulfur compound, an organic nitrogen sulfur compound, an organic halogen compound, a haloarylsulfone compound, an iodopropargyl compound, a haloalkylthio compound, a nitrile compound, a pyridine compound, an 8-oxyquinoline compound, a benzothiazole compound, an isothiazoline compound, a dithiol compound, a pyridine oxide compound, a nitropropane compound, an organotin compound, a phenol compound, a quaternary ammonium salt compound, a triazine compound, a thiazine compound, an anilide compound, an adamantane compound, a dithiocarbamate compound, a brominated indanone compound, a benzyl bromoacetate compound, and an inorganic salt compound. Specific examples of the organic halogen compound include sodium pentachlorophenol. Specific examples of the pyridine oxide compound include sodium 2-pyridinethiol-1-oxide. Specific examples of the isothiazoline compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Specific examples of the other preservative and fungicide include anhydrous sodium acetate, sodium sorbate, sodium benzoate, and trade names Proxel GXL (S), Proxel LV, and Proxel XL-2 (S), manufactured by Arch Chemicals Inc.

### (pH Adjuster)

Examples of the pH adjuster include alkanolamine such as diethanolamine, triethanolamine, and N-methyldiethanolamine; a hydroxide of an alkali metal such as lithium hydroxide, sodium hydroxide, and potassium hydroxide; ammonium hydroxide (aqueous ammonia); a carbonate of an alkali metal such as lithium carbonate, sodium carbonate, sodium bicarbonate, and potassium carbonate; an alkali metal salt of an organic acid such as sodium silicate and potassium acetate; and an inorganic base such as disodium phosphate.

### (Chelating Reagent)

Examples of the chelating reagent include disodium ethylenediaminetetraacetate, sodium nitrilotriacetate, sodium hydroxyethylethylenediaminetriacetate, sodium diethylenetriaminepentaacetate, and sodium uracil diacetate.

### (Rust Inhibitor)

Examples of the rust inhibitor include acid sulfite, sodium thiosulfate, ammonium thioglycolate, diisopropylammonium nitrite, pentaerythritol tetranitrate, and dicyclohexylammonium nitrite.

### (Defoamer)

Examples of the defoamer include a silicone compound, a silica mineral oil compound, an olefin compound, and an acetylene compound. Examples of the commercially available defoamer include Surfynol DF37, DF58, DF110D, DF220, and MD-20, and Olfine SK-14, manufactured by Shin-Etsu Chemical Co., Ltd.

### (Water-soluble Ultraviolet Absorber)

Examples of the water-soluble ultraviolet absorber include a sulfonated benzophenone compound, a benzotriazol compound, a salicylic acid compound, a cinnamic acid compound, and a triazine compound.

### (Antioxidant)

The antioxidant available can be various organic and metal complex antifading agents. Examples of the organic antifading agents include hydroquinones, alkoxyphenols, dialkoxyphenols, phenols, anilines, amines, indanes, chromanes, alkoxyanilines, and heterocycles.

### [Ink Preparation Method and Other Features]

The method of preparing the ink according to the present embodiment is not particularly limited, and any known preparation method can be employed. One example thereof is a method of preparing an aqueous dispersion liquid containing a pigment and a dispersant, adding a water-soluble organic solvent, an organic compound, and if necessary, an ink preparation agent, to this dispersion liquid, and mixing it.

Examples of the method of preparing the dispersion liquid include a phase inversion emulsification method, an acid precipitation method, an interfacial polymerization method, an in-situ polymerization method, a submerged curing coating method, a coacervation (phase separation) method, a submerged drying method, a melt-dispersion cooling method, an in-air suspension coating method, and a spray drying method. Among them, the phase inversion emulsification method, the acid precipitation method, and the interfacial polymerization method are preferred, and the phase inversion emulsification method is more preferred.

When the dispersion liquid is prepared by the phase inversion emulsification method, for example, the dispersant is dissolved in an organic solvent such as 2-butanone, and an aqueous solution of a neutralizer is added to prepare an emulsified liquid. A pigment is added to the resulting emulsified liquid for dispersion treatment. From the liquid thus obtained, the organic solvent and part of the water can be distilled under reduced pressure, thereby obtaining the desired dispersion liquid.

The dispersion treatment can be carried out using a sand mill (bead mill), a roll mill, a ball mill, a paint shaker, an ultrasonic disperser, a microfluidizer, or the like. For example, when the sand mill is used, the dispersion treatment can be performed by using beads with a particle size of about 0.01 to 1 mm and by appropriately setting the packing ratio of the beads. By performing operations such as filtration and centrifugation on the dispersion liquid obtained as described above, the particle sizes of the particles contained in the dispersion liquid can be made uniform. When foaming occurs during the preparation of the dispersion liquid, a known silicone or acetylene glycol defoamer can be added in an extremely small amount.

The ink according to the present embodiment preferably has a low content of inorganic impurities such as chloride of metal cations (e.g., sodium chloride) and metal sulfate (e.g., sodium sulfate). Such inorganic impurities are often present in a commercially available pigment. The standard content of the inorganic impurities is approximately 1% by mass or less with respect to the total mass of the pigment, and the lower limit is below the detection limit of the analyzer, i.e., 0% by mass is ideal. Examples of the method of obtaining a pigment with few inorganic impurities include a method using a reverse osmosis membrane; a method of suspending and stirring a solid pigment in a mixed solvent of C1-C4 alcohol such as methanol and water and separating the pigment through filtration, followed by drying; and a method of exchanging and adsorbing inorganic impurities with an ion exchange resin.

The ink according to the present embodiment is preferably microfiltered in advance. A membrane filter, glass filter paper, or the like can be used for microfiltration. The pore size of the filter or the like when performing microfiltration is usually 0.5 to 20 µm, preferably 0.5 to 10 µm.

The ink according to the present embodiment is also excellent in storage stability, redispersibility, abrasion resistance, color development, and chroma. An image recorded using the ink according to the present embodiment is also excellent in various fastnesses, such as water resistance, light resistance, heat resistance, and oxidation gas resistance (e.g., ozone gas resistance). In addition, the ink according to the present embodiment has little coating unevenness during image formation and is also excellent in image formability.

### <Ink Set and Ink and Medium Set>

The ink set according to the present embodiment includes the above-described ink according to the present embodiment and an additional ink different from the ink. The additional ink is not particularly limited as long as it has a configuration different from that of the ink according to the present embodiment but preferably has a hue different from that of the ink according to the present embodiment.

In addition, the ink and medium set according to the present embodiment includes the above-described ink or ink set according to the present embodiment and a printing medium.

The printing medium is not particularly limited but preferably a less ink-absorbent or non-ink-absorbent printing medium, and more preferably a non-ink-absorbent printing medium. Examples of the less ink-absorbent printing medium include plain paper without an ink-receiving layer, a medium used in rotogravure or offset printing, art paper, coated paper, matte paper, and cast paper. Further, examples of the non-ink-absorbent printing medium include a polyethylene terephthalate (PET) film, a polypropylene (PP) film, a vinyl chloride sheet, glass, and rubber.

### <Inkjet Printing Method>

The inkjet printing method according to the present embodiment is a method of performing printing by discharging droplets of the above-described ink according to the present embodiment in response to a printing signal and adhering the droplets to a printing medium. The ink nozzle and the like of the inkjet printer that discharges ink are not particularly limited and can be appropriately selected according to the purpose.

The inkjet printing method according to the present embodiment also includes a method of improving resolution of an image by ejecting a large number of inks with a low content of pigments in the inks in a small volume; a method of improving resolution of an image by using a plurality of inks having substantially the same hue but different contents of pigments in the inks; and a method of improving fixing properties of a pigment to a printing medium by using a colorless transparent ink together with an ink containing the pigment.

As the inkjet printing method, a known method can be employed. Examples thereof include a charge control method, a drop-on-demand method (also referred to as a pressure pulse method), an acoustic inkjet method, and a thermal inkjet method. Furthermore, the inkjet printing method may be either a multi-pass method or a single-pass method (one pass printing method). In an industrial inkjet printer, single-pass printing using a line-head type inkjet printer is also preferably performed for the purpose of increasing the printing speed.

When printing on a printing medium, for example, a container (ink tank) containing an ink is loaded into a predetermined position of an inkjet printer, and printing is performed on the printing medium by the printing method described above. Full-color printing can also be achieved by loading a container containing each color ink into a predetermined position of an inkjet printer and printing on a printing medium by the printing method described above.

When a printing medium without an ink-receiving layer is used, surface modification treatment is also preferably performed on the printing medium to improve fixing properties or the like of a coloring material. Examples of the surface modification treatment include corona discharge treatment, plasma treatment, and flame treatment. It is generally known that the effect of the surface modification treatment decreases over time. Therefore, it is preferable to sequentially perform the surface modification treatment step and the inkjet printing step, and it is more preferable to perform the surface modification treatment step right before the inkjet printing step.

For all of the above, combinations of preferred ones are more preferred, and combinations of more preferred ones are even more preferred. The same is true for combinations of preferred and more preferred, combinations of more preferred and even more preferred, and the like.

### EXAMPLES

Hereinafter, the present invention will be described in more detail with reference to Examples, but the present invention is not limited thereto.

In Examples, "part" and "%" mean part by mass and % by mass, respectively, unless otherwise specified. When it was necessary to quantify pigment solids in a dispersion liquid, a dry weight method was employed with MS-70 manufactured by A&D Company, Limited. The pigment solids are conversion values obtained by calculating only the pigment solids from the total amount of the solid content.

### <Preparation Example 1: Preparation of Pigment Dispersion Liquid DP1>

Synthesis Example 3 in International Publication No. WO 2013/115071 was replicated to obtain a block copolymer. The obtained block copolymer had an acid value of 105 mg KOH/g and a mass average molecular weight of 25000. The obtained block copolymer (6 parts) was dissolved in 2-butanone (30 parts) to form a homogeneous solution. A 28% aqueous ammonia solution (0.68 parts) dissolved in ion-exchanged water (53 parts) was added to this liquid, and the mixture was stirred for an hour to obtain an emulsified liquid. C.I. Pigment Blue 15:4 (Chromofine Blue 4851, manufactured by Dainichiseika Color & Chemicals Mfg. Co., Ltd.) (20 parts) was added to the emulsified liquid, and the mixture was subjected to a dispersion treatment in a sand grinder under a condition of 1500 rpm for 15 hours. Ion-exchanged water (100 parts) was added dropwise to the resulting liquid, and dispersing beads were removed from the mixture by filtration. Then, 2-butanone and part of the water were distilled under reduced pressure with an evaporator to obtain a pigment dispersion liquid with 12% pigment solids. The obtained pigment dispersion liquid was referred to as "DP1".

### <Preparation Example 2: Preparation of Pigment Dispersion Liquid DP2>

BYKJET 9151 (manufactured by BYK) (8 parts) was dissolved in ion-exchanged water (72 parts) and stirred for an hour. C.I. Pigment Blue 15:4 (Chromofine Blue 4851, manufactured by Dainichiseika Color & Chemicals Mfg. Co., Ltd.) (20 parts) was added to the resulting solution, and the mixture was subjected to a dispersion treatment in a sand grinder under a condition of 1500 rpm for 15 hours. Ion-exchanged water (70 parts) was added dropwise to the resulting liquid, and dispersing beads were removed from the mixture by filtration to obtain a pigment dispersion liquid with 11.6% pigment solids. The obtained pigment dispersion liquid was referred to as "DP2".

### <Preparation Example 3: Preparation of Pigment Dispersion Liquid DP3>

Joncryl 68 (manufactured by BASF SE, mass average molecular weight: 13000) (9 parts) and triethanolamine (6 parts) were dissolved in ion-exchanged water (75 parts) and stirred for an hour. C.I. Pigment Blue 15:4 (Chromofine Blue 4851, manufactured by Dainichiseika Color & Chemicals Mfg. Co., Ltd.) (30 parts) was added to the resulting solution, and the mixture was subjected to a dispersion treatment in a sand grinder under a condition of 1500 rpm for 15 hours. Ion-exchanged water (40 parts) was added dropwise to the resulting liquid, and dispersing beads were removed from the mixture by filtration to obtain a pigment dispersion liquid with 18.7% pigment solids. The obtained pigment dispersion liquid was referred to as "DP3".

### <Examples 1 to 19 and Comparative Examples 1 to 8>

Components listed in Tables 1 to 4 below were mixed together and then filtered through a membrane filter having a pore size of 3 µm to obtain inks of Examples 1 to 19 and Comparative Examples 1 to 8. The numerical values in the columns of each component in Tables 1 to 4 represent the amount (parts) of the component used, and "-" means that the component was not used. In addition, "-" in the column of the surface tension in Table 4 means that the surface tension could not be measured due to incompatibility of the ink, while "-" in the column of the interfacial tension against PET means that no organic compound was contained.

Each abbreviation or the like in Tables 1 to 4 below is as follows.
DP1: pigment dispersion liquid obtained in Preparation Example 1
DP2: pigment dispersion liquid obtained in Preparation Example 2
DP3: pigment dispersion liquid obtained in Preparation Example 3
1,4-BD: 1,4-butanediol (manufactured by Tokyo Chemical Industry Co., Ltd.)
1,5-PD: 1,5-pentanediol (manufactured by Tokyo Chemical Industry Co., Ltd.)
BDG: diethylene glycol monobutyl ether (manufactured by Tokyo Chemical Industry Co., Ltd.)
PnP: propylene glycol monopropyl ether (manufactured by The Dow Chemical Company)
DEGBME: diethylene glycol butyl methyl ether (manufactured by Tokyo Chemical Industry Co., Ltd.)
EGmBz: ethylene glycol monobenzyl ether (manufactured by Tokyo Chemical Industry Co., Ltd.)
1,8-OD: 1,8-octanediol (manufactured by Tokyo Chemical Industry Co., Ltd.)
DEGmBz: diethylene glycol monobenzyl ether (manufactured by Tokyo Chemical Industry Co., Ltd.)
DEGPh: diethylene glycol monophenyl ether (manufactured by Nippon Nyukazai Co., Ltd.)
1,9-ND: 1,9-nonanediol (manufactured by Tokyo Chemical Industry Co., Ltd.)
EGPh: ethylene glycol monophenyl ether (manufactured by Tokyo Chemical Industry Co., Ltd.)
1,2-HepD: 1,2-heptanediol (manufactured by Tokyo Chemical Industry Co., Ltd.)
DPnB: dipropylene glycol monobutyl ether (manufactured by The Dow Chemical Company)
PnB: propylene glycol monobutyl ether (manufactured by The Dow Chemical Company)
SF440: surfactant (Surfynol 440, manufactured by Evonik Industries AG)
DEGHE: diethylene glycol monohexyl ether (manufactured by Nippon Nyukazai Co. Ltd.)

**[Table 1]**

| Component | | Example | | | | | | |
|---|---|---|---|---|---|---|---|---|
| | | 1 | 2 | 3 | 4 | 5 | 6 | 7 |
| Pigment | DP1 | 26.72 | 26.72 | 26.72 | 26.72 | 26.72 | 26.72 | 26.72 |
| | DP2 | - | - | - | - | - | - | - |
| | DP3 | - | - | - | - | - | - | - |
| Water-soluble organic solvent | BLAUNON GL20 | - | - | - | - | - | - | - |
| | 1.4-BD | - | - | - | 5.00 | - | - | - |
| | 1.5-PD | 5.00 | 5.00 | 5.00 | - | - | - | - |
| | BDG | - | - | - | - | 5.00 | - | - |
| | PnP | - | - | - | - | - | 5.00 | - |
| | DEGBME | - | - | - | - | - | - | 5.00 |
| | 2-Ethylhexane-1,3-diol | | | | | | | |
| Organic compound | EGmBz | - | - | - | - | - | - | - |
| | 1.8-OD | 0.50 | 0.50 | 0.50 | 0.50 | 0.50 | 0.50 | 0.50 |
| | DEGmBz | - | - | - | - | - | - | - |
| | DEGPh | - | - | - | - | - | - | - |
| | 1,9-ND | - | - | - | - | - | - | - |
| | EGPh | - | - | - | - | - | - | - |
| | 1.2-HepD | - | - | - | - | - | - | - |
| | DPnB | - | - | - | - | - | - | - |
| | PnB | - | - | - | - | - | - | - |
| Fixing resin | A-1127 | - | - | - | - | - | - | - |
| | P5300 | - | - | - | - | - | - | - |
| | AQ-515 | - | - | - | - | - | - | - |
| Surface-tension modifier | SF440 | - | 0.50 | 0.20 | - | - | - | - |
| | DEGHE | 0.50 | - | - | 0.50 | 0.50 | 0.50 | 0.50 |
| Purified water | | Balance | | | | | | |
| Total | | 100.0 | 100.0 | 100.0 | 100.0 | 100.0 | 100.0 | 100.0 |
| logP Value of water-soluble organic solvent | | -0.635 | -0.635 | -0.635 | -1.164 | 0.665 | 0.710 | 1.188 |
| Interfacial tension of organic compound against PET (mN/m) | | 6.54 | 6.54 | 6.54 | 6.54 | 6.54 | 6.54 | 6.54 |
| Surface tension (mN/m) | | 41.12 | 31.55 | 35.48 | 38.63 | 35.00 | 34.92 | 32.17 |

**[Table 2]**

| Component | | Example | | | | | |
|---|---|---|---|---|---|---|---|
| | | 8 | 9 | 10 | 11 | 12 | 13 |
| Pigment | DP1 | 26.72 | 26.72 | 26.72 | 26.72 | 26.72 | 26.72 |
| | DP2 | - | - | - | - | - | - |
| | DP3 | - | - | - | - | - | - |
| Water-soluble organic solvent | BLAUNON GL20 | - | - | - | - | - | - |
| | 1.4-BD | - | - | - | - | - | - |
| | 1.5-PD | 5.00 | 5.00 | 5.00 | 5.00 | 5.00 | 5.00 |
| | BDG | - | - | - | - | - | - |
| | PnP | - | - | - | - | - | - |
| | DEGBME | - | - | - | - | - | - |
| | 2-Ethylhexane-1,3-diol | | | | | | |
| Organic compound | EGmBz | 0.50 | - | - | - | - | - |
| | 1.8-OD | - | - | - | - | - | - |
| | DEGmBz | - | 0.50 | - | - | - | - |
| | DEGPh | - | - | 0.50 | - | - | - |
| | 1,9-ND | - | - | - | 0.50 | - | - |
| | EGPh | - | - | - | - | 0.50 | - |
| | 1.2-HepD | - | - | - | - | - | 0.50 |
| | DPnB | - | - | - | - | - | - |
| | PnB | - | - | - | - | - | - |
| Fixing resin | A-1127 | - | - | - | - | - | - |
| | P5300 | - | - | - | - | - | - |
| | AQ-515 | - | - | - | - | - | - |
| Surface-tension modifier | SF440 | - | - | - | - | - | - |
| | DEGHE | 0.50 | 0.50 | 0.50 | 0.50 | 0.50 | 0.50 |
| Purified water | | Balance | | | | | |
| Total | | 100.0 | 100.0 | 100.0 | 100.0 | 100.0 | 100.0 |
| logP Value of water-soluble organic solvent | | -0.635 | -0.635 | -0.635 | -0.635 | -0.635 | -0.635 |
| Interfacial tension of organic compound against PET (mN/m) | | 6.05 | 6.79 | 8.87 | 9.06 | 10.93 | 13.64 |
| Surface tension (mN/m) | | 39.25 | 39.01 | 38.23 | 40.02 | 39.72 | 36.45 |

**[Table 3]**

| Component | | Example | | | | | |
|---|---|---|---|---|---|---|---|
| | | 14 | 15 | 16 | 17 | 18 | 19 |
| Pigment | DP1 | 26.72 | - | - | - | - | - |
| | DP2 | - | 30.10 | - | - | - | - |
| | DP3 | - | - | 18.71 | 18.71 | 18.71 | 18.71 |
| Water-soluble organic solvent | BLAUNON GL20 | - | - | - | - | - | - |
| | 1.4-BD | - | - | - | - | - | - |
| | 1.5-PD | 5.00 | 5.00 | 5.00 | 5.00 | 5.00 | 5.00 |
| | BDG | - | - | - | - | - | - |
| | PnP | - | - | - | - | - | - |
| | DEGBME | - | - | - | - | - | - |
| | 2-Ethylhexane-1,3-diol | | | | | | |
| Organic compound | EGmBz | - | - | - | - | - | - |
| | 1.8-OD | 0.50 | 0.50 | 0.50 | 0.50 | 0.50 | 0.50 |
| | DEGmBz | - | - | - | - | - | - |
| | DEGPh | - | - | - | - | - | - |
| | 1, 9-ND | - | - | - | - | - | - |
| | EGPh | - | - | - | - | - | - |
| | 1.2-HepD | - | - | - | - | - | - |
| | DPnB | - | - | - | - | - | - |
| | PnB | - | - | - | - | - | - |
| Fixing resin | A-1127 | - | - | - | 25.90 | - | - |
| | P5300 | - | - | - | - | 53.77 | - |
| | AQ-515 | - | - | - | - | - | 41.90 |
| Surface-tension modifier | SF440 | - | - | - | - | - | - |
| | DEGHE | 0.40 | 0.50 | 0.50 | 0.50 | 0.50 | 0.50 |
| Purified water | | Balance | | | | | |
| Total | | 100.0 | 100.0 | 100.0 | 100.0 | 100.0 | 100.0 |
| logP Value of water-soluble organic solvent | | -0.635 | -0.635 | -0.635 | -0.635 | -0.635 | -0.635 |
| Interfacial tension of organic compound against PET (mN/m) | | 6.54 | 6.54 | 6.54 | 6.54 | 6.54 | 6.54 |
| Surface tension (mN/m) | | 42.43 | 35.25 | 40.27 | 39.69 | 34.25 | 40.10 |

**[Table 4]**

| Component | | Comparative Example | | | | | | | |
|---|---|---|---|---|---|---|---|---|---|
| | | 1 | 2 | 3 | 4 | 5 | 6 | 7 | 8 |
| Pigment | DP1 | 26.72 | 26.72 | 26.72 | 26.72 | 26.72 | 26.72 | 26.72 | 26.72 |
| | DP2 | - | - | - | - | - | - | - | - |
| | DP3 | - | - | - | - | - | - | - | - |
| Water-soluble organic solvent | BLAUNON GL20 | - | - | - | 5.00 | - | - | - | - |
| | 1.4-BD | - | - | - | - | - | - | - | - |
| | 1.5-PD | 5.00 | 5.00 | 5.00 | - | - | 5.00 | 5.00 | 5.00 |
| | BDG | - | - | - | - | - | - | - | - |
| | PnP | - | - | - | - | - | - | - | - |
| | DEGBME | - | - | - | - | - | - | - | - |
| | 2-Ethylhexane-1,3-diol | - | - | - | - | 5.00 | - | - | - |
| Organic compound | EGmBz | - | - | - | - | - | - | - | - |
| | 1.8-OD | 0.50 | 0.50 | 0.50 | 0.50 | 0.50 | - | - | - |
| | DEGmBz | - | - | - | - | - | - | - | - |
| | DEGPh | - | - | - | - | - | - | - | - |
| | 1,9-ND | - | - | - | - | - | - | - | - |
| | EGPh | - | - | - | - | - | - | - | - |
| | 1.2-HepD | - | - | - | - | - | - | - | - |
| | DPnB | - | - | - | - | - | 0.50 | - | - |
| | PnB | - | - | - | - | - | - | 0.50 | - |
| Fixing resin | A-1127 | - | - | - | - | - | - | - | - |
| | P5300 | - | - | - | - | - | - | - | - |
| | AQ-515 | - | - | - | - | - | - | - | - |
| Surface-tension modifier | SF440 | - | - | - | - | - | - | - | - |
| | DEGHE | 0.20 | 0.30 | 0.10 | 0.50 | 0.50 | 0.50 | 0.50 | 0.50 |
| Purified water | | Balance | | | | | | | |
| Total | | 100.0 | 100.0 | 100.0 | 100.0 | 100.0 | 100.0 | 100.0 | 100.0 |
| logP Value of water-soluble organic solvent | | -0.635 | -0.635 | -0.635 | -5.420 | 1.258 | -0.635 | -0.635 | -0.635 |
| Interfacial tension of organic compound against PET (mN/m) | | 6.54 | 6.54 | 6.54 | 6.54 | 6.54 | 15.52 | 16.79 | - |
| Surface tension (mN/m) | | 45.51 | 43.16 | 45.98 | 38.00 | - | 39.18 | 39.78 | 40.92 |

### <Evaluation>

### [Evaluation of Compatibility]

A mixture containing materials other than the pigment dispersion liquid of the compositions of Examples 1 to 19 and Comparative Examples 1 to 8 were prepared to evaluate compatibility of the mixture. The results are shown in Tables 5 to 7 below.

### -Criteria for Evaluation of Compatibility-

A: Homogeneous and completely mixed
B: No oil droplets on the liquid surface, but suspended and not completely dissolved
C: Oil droplets being floating on the liquid surface of the mixture, and not completely dissolved
D: Components in the mixture being separated and not dissolved at all

### [Measurement of Contact Angle]

A PET film (E5102, manufactured by Toyobo Co., Ltd.) was used as a substrate, and a contact angle between each of the inks obtained above and the PET film was measured. The evaluation was made according to the following evaluation criteria. Specifically, DM-501 Hi (manufactured by Kyowa Interface Science Co., Ltd.) was used as a contact angle meter to measure a contact angle at 25°C 10 seconds after ink landing with a droplet amount of 2 µL. The results are shown in Tables 5 to 7 below. Since a lower numerical value of the contact angle means that the ink wets and spreads well on the PET film, the following evaluation criteria are preferably B or higher for practical use. In Table 7 below, "-" indicates that the ink material was not mixed, and thus evaluation of the ink was impossible.

### -Criteria for Evaluation of Contact Angle-

A: Contact angle ≤ 18°
B: 18° < contact angle ≤ 20°
C: 20° < contact angle ≤ 22°
D: 22° < contact angle

**[Table 5]**

| | Example | | | | | | | | | |
|---|---|---|---|---|---|---|---|---|---|---|
| | 1 | 2 | 3 | 4 | 5 | 6 | 7 | 8 | 9 | 10 |
| Compatibility | A | A | A | A | A | A | A | A | A | A |
| Contact angle | A | A | A | A | A | A | A | A | A | A |

**[Table 6]**

| | Example | | | | | | | | |
|---|---|---|---|---|---|---|---|---|---|
| | 11 | 12 | 13 | 14 | 15 | 16 | 17 | 18 | 19 |
| Compatibility | A | A | A | A | A | A | A | A | A |
| Contact angle | A | A | A | A | A | A | A | A | A |

**[Table 7]**

| | Comparative Example | | | | | | | |
|---|---|---|---|---|---|---|---|---|
| | 1 | 2 | 3 | 4 | 5 | 6 | 7 | 8 |
| Compatibility | A | A | A | A | D | A | A | A |
| Contact angle | D | C | D | D | - | C | C | D |

As shown in Tables 5 to 7 above, the inks of Examples 1 to 19 were superior to the inks of Comparative Examples 1 to 8 in terms of wettability to the PET film and were equivalent to or better than the inks of Comparative Examples 1 to 8 in terms of compatibility. The results indicate that the inks of Examples 1 to 19 are excellent inks having both wettability and compatibility.

## Claims

1. An inkjet ink comprising a pigment, a water-soluble organic solvent, and an organic compound excluding the pigment and the water-soluble organic solvent, wherein the inkjet ink satisfies any one of conditions (1) to (3) below and has a surface tension of 43.1 mN/m or less at 25°C:
(1) the water-soluble organic solvent has a logP value of more than -5.420 and less than 1.258,
the organic compound has an interfacial tension against polyethylene terephthalate (PET) of 15.50 mN/m or less, where the interfacial tension at 25°C between a PET film and a mixture of 1 part by mass of the organic compound, 9 parts by mass of 1,4-butanediol, and 90 parts by mass of purified water, as determined by contacting the mixture with the PET film, is defined as the interfacial tension of the organic compound against PET, and
a value of (B)/(A) is 0.005 to 1, where (A) is a total mass of the water-soluble organic solvent contained in the inkjet ink, and (B) is a total mass of the organic compound;
(2) the organic compound is at least one selected from the group consisting of ethylene glycol monobenzyl ether, diethylene glycol monobenzyl ether, and diethylene glycol monophenyl ether; and
(3) the organic compound is a C7-C9 1,2-alkanediol, and a value of (C)/(A) is less than 0.4, where (A) is the total mass of the water-soluble organic solvent contained in the inkjet ink, and (C) is a total mass of the 1,2-alkanediol.

2. The inkjet ink according to claim 1, wherein the organic compound has an interfacial tension against PET of 14.00 mN/m or less.

3. The inkjet ink according to claim 1, wherein the organic compound has an interfacial tension against PET of 11.00 mN/m or less.

4. An ink set comprising: the inkjet ink according to any one of claims 1 to 3; and an additional inkjet ink different from the inkjet ink.

5. An ink and medium set comprising: the inkjet ink according to any one of claims 1 to 3 or the ink set according to claim 4; and a printing medium.

6. A printed medium to which the inkjet ink according to any one of claims 1 to 3 or each inkjet ink included in the ink set according to claim 4 has adhered.
